# FASCICULE DE BREVET EUROPEEN

(11) **EP 2 249 963 B1**
(45) Date de publication et mention de la délivrance du brevet: **28.09.2011**
(21) Numéro de dépôt: 09716931.2
(22) Date de dépôt: 30.01.2009
(51) Int. Cl.: B01J 21/02, B01J 21/04, B01J 23/755, B01J 35/00, B01J 37/08, C10G 45/36, C01F 7/02, C01F 7/44

(54) **CATALYSEUR D'HYDROGENATION SELECTIVE ET SON PROCEDE DE PREPARATION**
KATALYSATOR FÜR SELEKTIVE HYDROGENIERUNG UND VERFAHREN ZU SEINER HERSTELLUNG
SELECTIVE HYDROGENATION CATALYST AND METHOD FOR PREPARING SAME

(30) Priorité: 07.02.2008 FR 0800724
(43) Date de publication de la demande: 17.11.2010
(73) Titulaire: IFP Energies nouvelles, 92852 Rueil-Malmaison Cedex (FR)
(72) Inventeur: DUBREUIL, Anne-Claire, F-69003 Lyon (FR); FISCHER, Lars, F-38200 Vienne (FR); REBOURS, Bernadette, F-69007 Lyon (FR); REVEL, Renaud, F-38200 Serpaize (FR); THOMAZEAU, Cécile, 69008 LYON (FR)
(86) Numéro de dépôt international: PCT/FR2009/000103
(87) Numéro de publication internationale: WO 2009/109722

(56) Documents cités:
- EP-A- 0 576 828
- WO-A-2006/040159
- WO-A-2006/125832
- FR-A- 2 764 213
- US-A- 5 569 802
- US-A1- 2005 019 249
- US-A1- 2006 096 891
- US-B1- 6 437 206

## Description

Le procédé d'hydrogénation sélective permet de transformer les composés polyinsaturés des coupes pétrolières par conversion des composés les plus insaturés vers les alcènes correspondants en évitant la saturation totale et donc la formation des alcanes correspondants.

L'objet de l'invention est de proposer un catalyseur à performances améliorées appliqué au procédé d'hydrogénation sélective des composés hydrocarbonés insaturés présents dans les coupes d'hydrocarbures, de préférence des coupes issues du vapocraquage ou du craquage catalytique.

Dans la suite, les groupes d'éléments chimiques sont donnés selon la classification CAS (CRC Handbook of Chemistry and Physics, éditeur CRC press, rédacteur en chef D.R. Lide , 81ème édition, 2000-2001). Par exemple, le groupe VIII selon la classification CAS correspond aux métaux des colonnes 8, 9 et 10 selon la nouvelle classification IUPAC.

### ART ANTÉRIEUR

Les catalyseurs d'hydrogénation sélective sont généralement à base de métaux du groupe VIII du tableau périodique, de préférence le palladium ou le nickel. Le métal se présente sous la forme de petites particules métalliques déposées sur un support qui peut être un oxyde réfractaire sous forme de billes, d'extrudés, de trilobes ou sous des formes présentant d'autres géométries. La teneur en métal, la présence éventuelle d'un deuxième élément métallique, la taille des particules de métal et la répartition de la phase active dans le support font partie des critères qui ont une importance sur l'activité et la sélectivité des catalyseurs.

La présente invention vise à obtenir des catalyseurs à base de nickel ayant des propriétés physico-chimiques et des performances catalytiques améliorées par rapport aux catalyseurs à base de nickel de l'art antérieur.

Les catalyseurs selon l'invention comprennent du nickel déposé sur un support alumine, ledit support alumine possédant une structure cristallographique et donc un diffractogramme obtenu par diffractométrie de rayons X particulier. Cette propriété particulière du support est à l'origine de l'amélioration des performances catalytiques.

Des demandes de brevet et des brevets de l'art antérieur présentent des catalyseurs d'hydrogénation sélective comprenant au moins un métal noble et un support à base d'alumine, ou des supports de catalyseurs de type oxyde d'aluminium, dont les diffractogrammes de rayons X sont particuliers. On peut notamment citer les demandes de brevet EP-A 576828 et WO2006/125832 ainsi que le brevet US6437206B. Cependant, ces diffractogrammes obtenus pour les supports ou les catalyseurs selon l'art antérieur diffèrent de la présente invention par la présence et/ou l'absence et/ou l'intensité des pics obtenus pour des distances interréticulaires données.

La demande FR 2 764 213 décrit un procédé de préparation d'un catalyseur et son utilisation dans un procédé d'hydrogénation.

### RÉSUMÉ DE L'INVENTION

L'invention concerne un catalyseur comprenant du nickel sur un support oxyde d'aluminium. Le support d'oxyde d'aluminium présente à l'état calciné un diffractogramme obtenu par diffractométrie de rayons X comprenant des raies qui correspondent aux distances interréticulaires et aux intensités relatives suivantes :

| Distances interréticulaires d (10⁻¹⁰ m) | Intensités relatives I/Io (en %) |
|---|---|
| 5,03 à 5,22 | 1-5 |
| 4,56 à 4,60 | 1-10 |
| 4,06 à 4,10 | 1-5 |
| 2,80 à 2,85 | 5-20 |
| 2,73 | 15-35 |
| 2,60 | 5-10 |
| 2,43 | 35-40 |
| 2,29 | 30-40 |
| 1,99 | 60-95 |
| 1,95 | 25-50 |
| 1,79 | 1-10 |
| 1,53 | 5-10 |
| 1,51 | 5-10 |
| 1,41 | 40-60 |
| 1,39 | 100 |
| 1,23 à 1,26 | 1-5 |
| 1,14 | 5-10 |
| 1,11 | 1-5 |
| 1,04 | 1-5 |
| 1,00 | 5-10 |
| 0,97 | 1-5 |

### DESCRIPTION DÉTAILLÉE DE L'INVENTION

La présente invention vise à obtenir des catalyseurs à base de nickel ayant des propriétés physico-chimiques et des performances catalytiques améliorées par rapport aux catalyseurs à base de nickel de l'art antérieur. Plus précisément, la présente invention propose un procédé de préparation d'un support alumine ainsi que la préparation d'un catalyseur, sur ce support alumine, et un procédé d'hydrogénation sélective mettant en oeuvre ledit catalyseur conduisant à des performances catalytiques améliorées dudit catalyseur.

La présente invention concerne des catalyseurs comprenant du nickel sur un support alumine. Le support alumine présente à l'état calciné un diffractogramme obtenu par diffractométrie de rayons X comprenant des raies qui correspondent aux distances interréticulaires et aux intensités relatives suivantes :

| Distances interréticulaires d (10⁻¹⁰ m) | Intensités relatives I/Io (en %) |
|---|---|
| 5,03 à 5,22 | 1-5 |
| 4,56 à 4,60 | 1-10 |
| 4,06 à 4,10 | 1-5 |
| 2,80 à 2,85 | 5-20 |
| 2,73 | 15-35 |
| 2,60 | 5-10 |
| 2,43 | 35-40 |
| 2,29 | 30-40 |
| 1,99 | 60-95 |
| 1,95 | 25-50 |
| 1,79 | 1-10 |
| 1,53 | 5-10 |
| 1,51 | 5-10 |
| 1,41 | 40-60 |
| 1,39 | 100 |
| 1,23 à 1,26 | 1-5 |
| 1,14 | 5-10 |
| 1,11 | 1-5 |
| 1,04 | 1-5 |
| 1,00 | 5-10 |
| 0,97 | 1-5 |

Seules les raies dont l'intensité relative est supérieure ou égale à 1% sont considérées.

Dans tout le texte, les distances interréticulaires sont données avec une précision de + ou - 0,01.10⁻¹⁰ m.

Selon un mode préféré, le support alumine présente à l'état calciné un diffractogramme comprenant uniquement des raies qui correspondent aux distances interréticulaires et aux intensités relatives suivantes :

| Distances interréticulaires d (10⁻¹⁰ m) | Intensité relative I/Io (en %) |
|---|---|
| 5,41 à 5,47 | 0-5 |
| 5,03 à 5,22 | 1-5 |
| 4,56 à 4,60 | 1-10 |
| 4,06 à 4,10 | 1-5 |
| 2,86 à 2,88 | 5-20 |
| 2,80 à 2,85 | 5-20 |
| 2,73 | 15-35 |
| 2,60 | 5-10 |
| 2,43 | 35-40 |
| 2,29 | 30-40 |
| 1,99 | 60-95 |
| 1,95 | 25-50 |
| 1,92 | 0-20 |
| 1,79 | 1-10 |
| 1,53 | 5-10 |
| 1,51 | 5-10 |
| 1,45 | 0-10 |
| 1,43 | 0-10 |
| 1,41 | 40-60 |
| 1,39 | 100 |
| 1,23 à 1,26 | 1-5 |
| 1,14 | 5-10 |
| 1,11 | 1-5 |
| 1,04 | 1-5 |
| 1,00 | 5-10 |
| 0,97 | 1-5 |

Le diffractogramme est caractéristique de la structure spécifique du support du catalyseur selon l'invention. Le support alumine peut comprendre des impuretés et des additifs tant que le diffractogramme reste tel que décrit ci dessus. Par exemple, le support peut comprendre des oxydes inorganiques tels que les oxydes de métaux des groupes IIA, IIIB, IVB, IIB, IIIA, IVA selon la classification CAS, de préférence la silice, le dioxyde de titane, le dioxyde de zirconium, l'oxyde de zinc, l'oxyde de magnésium et l'oxyde de calcium.

La teneur en cation des colonnes IIA, IIIB, IVB, IIB, IIIA, IVA est de préférence comprise entre 0,01 et 30 % en poids, de préférence entre 0,01 et 10 % en poids, de façon encore plus préférée entre 0,03 et 1,5% en poids. S'il est présent dans le catalyseur, la teneur en métal du groupe IB peut être comprise entre 1 à 10 000 ppm poids par rapport au support.

La teneur maximale en oxydes autres que l'alumine dans le support dépend des oxydes présents. Elle peut être déterminée par le diffractogramme puisqu'à un changement de structure est associé un changement de diffractogramme. En général, la teneur en tels oxydes sera inférieure à 50%, de préférence 30%, de manière très préférée 15% poids par rapport à la masse du support.

Selon l'invention, le support poreux se présente avantageusement sous forme de billes, de trilobes, d'extrudés, de pastilles, ou d'agglomérats irréguliers et non sphériques dont la forme spécifique peut résulter d'une étape de concassage. De manière très avantageuse, ledit support se présente sous forme de billes ou d'extrudés. De manière encore plus avantageuse, ledit support se présente sous forme de billes.

Le volume poreux du support est généralement compris entre 0,1 et 1,5 cm³/g, de préférence compris entre 0,5 et 1 cm³/g.

La surface spécifique du support poreux est comprise entre 30 et 130 m²/g, de manière préférée entre 50 et 100 m²/g, de manière très préférée entre 60 et 80 m²/g.

La teneur en nickel dans le catalyseur est généralement comprise entre 1 et 50 % poids, de façon préférée entre 5 et 30 % poids.

Le diffractogramme du catalyseur sous forme oxyde présente donc, en plus des raies caractéristiques du support, les raies caractéristiques du nickel, sous forme oxyde, ou sous une forme ou il se trouve en combinaison avec d'autres composés (nitrate de nickel, chlorate de nickel, formiate de nickel). L'homme du métier se reportera aux tables ICDD (International Center for Diffraction Data) pour connaître les positions de ces raies, pour chacun des composés nommé ci dessus. Par exemple, les positions des raies de l'oxyde de nickel, NiO, sont reportées dans les tables 00-047-1049 ou 01-071-1179. Elles sont les suivantes reportées en d (10⁻¹⁰m) : 2,41, 2,09, 1,48, 1,25, 1,21, 1,04, 0,96, 0,93, 0,85, 0,80. Les positions des raies des composés du nitrate de nickel Ni(NO₃)₂(OH)_{y}, xH₂O (x compris entre 2 et 8, y compris entre 0 et 4), des composés du formiate de nickel Ni(CH₂O)₂, xH₂O (x compris entre 0 et 2) sont données dans les tales ICDD correspondantes.

Le catalyseur peut également se présenter sous forme réduite et passivée à l'air. Dans ce cas le diffractogramme du catalyseur peut présenter, en plus des raies citées ci dessus, les raies caractéristiques du nickel sous forme réduite. Les positions des raies du nickel, Ni, sont par exemple reportées dans la table 00-004-0850. Elles sont les suivantes reportées en d(10⁻¹⁰m) : 2,03, 1,76, 1,25, 1,06, 1,02, 0,88, 0,81, 0,79.

Le catalyseur peut se présenter sous une forme passivée avec des composés soufrés selon des méthodes connues de l'homme du métier et notamment, à titre d'exemple selon l'une des méthodes décrites dans un des brevets EP466567(B1), US5153163, FR2676184, WO 2004098774.

Dans ce cas, le diffractogramme aux rayons X du catalyseur peut également présenter en plus des raies énoncées ci dessus, des raies caractéristiques du nickel sous forme sulfure. Les positions des raies des composés sulfures de nickel NiₓS_{y} (x compris entre 1 et 9, y compris entre 1 et 8) sont données dans les tables ICDD correspondantes.

### PRÉPARATION DU SUPPORT

Selon une première variante les supports selon l'invention sont des agglomérés d'alumine se présentait sous forme de billes. Selon cette première variante la préparation du support comprend les étapes suivantes :
s1) déshydratation par calcination flash d'un hydroxyde ou d'un oxyhydroxyde d'aluminium, préférentiellement de l'hydrargillite, pour obtenir une poudre d'alumine active;

La calcination flash est un chauffage intense et rapide qui conduit à une déshydratation brutale d'un hydroxyde d'aluminium (hydrargillite, gibbsite ou bayerite) ou d'un oxyhydroxyde d'aluminium (boehmite ou diaspore), à l'aide d'un courant de gaz chaud permettant d'éliminer et d'entraîner très rapidement l'eau évaporée. La température est comprise entre 400 et 1200°C, de préférence entre 600°C et 900°C et la durée est comprise entre une fraction de seconde et 5 secondes, de préférence entre 0,1 seconde et 4 secondes. Comme composé de départ, on utilise préférentiellement de l'hydrargillite. L'expérience montre que ce composé est le plus favorable pour l'obtention d'un produit final ayant les propriétés recherchées. De plus, il est relativement bon marché.

Généralement, la poudre d'alumine active obtenue après la déshydratation de l'hydroxyde ou oxyhydroxyde d'aluminium est broyée.

Généralement, la poudre d'alumine active obtenue après la déshydratation de l'hydroxyde ou de l'oxyhydroxyde d'aluminium est lavée avec de l'eau ou une solution aqueuse acide.
s2) mise en forme de ladite poudre d'alumine active de manière à obtenir des billes d'une densité de remplissage en cru comprise entre 500 et 1100 kg/m3, préférentiellement incluse entre 700 et 950 kg/m3, et d'un diamètre compris majoritairement entre 0,8 et 10 mm, préférentiellement entre 1 et 5 mm;

La mise en forme de ladite poudre d'alumine active de manière à obtenir des billes, nommée granulation, est généralement réalisée au moyen d'une technologie tournante comme un drageoir tournant ou un tambour tournant. Ces procédés permettent d'obtenir des billes de diamètre et de répartitions de pores contrôlées, ces dimensions et ces répartitions étant, en général, créées pendant l'étape d'agglomération. La porosité peut être créée par différents moyens, comme le choix de la granulométrie de la poudre d'alumine ou l'agglomération de plusieurs poudres d'alumine de différentes granulométries. Une autre méthode consiste à mélanger à la poudre d'alumine, avant ou pendant l'étape d'agglomération, un ou des composés, appelés porogènes, disparaissant par chauffage et créant ainsi une porosité dans les billes. Comme composés porogènes utilisés, on peut citer, à titre d'exemple, la farine de bois, le charbon de bois, le soufre, des goudrons, des matières plastiques ou émulsions de matières plastiques telles que le polychlorure de vinyle, des alcools polyvinyliques, la naphtaline ou analogues. La quantité de composés porogènes ajoutés est déterminée par le volume désiré.

Lors de la mise en forme de ladite poudre d'alumine, on lui ajoute généralement un ou des matériaux porogènes disparaissant par chauffage. Lesdits matériaux porogènes sont sélectionnés dans le groupe constitué par la farine de bois, le charbon de bois, le soufre, les goudrons, les matières plastiques, les émulsions de matières plastiques, les alcools polyvinyliques et la naphtaline.
s3) traitement thermique à une température comprise entre 200 et 1200 °C, de préférence entre 400 et 900°C desdites billes de manière à leur procurer une surface spécifique comprise entre 50 et 420 m²/g,
s4) traitement hydrothermal desdites billes par imprégnation avec de l'eau ou une solution aqueuse préférentiellement acide, puis séjour dans un autoclave à une température comprise entre 100 et 300°C, de préférence entre 150 et 250°C.

Le traitement hydrothermal est généralement conduit à une température de 100 à 300°C, préférentiellement de 150 à 250°C, pendant une durée supérieure à 45 minutes, préférentiellement de 1 à 24 heures, très préférentiellement de 1,5 à 12 heures. Le traitement hydrothermal est généralement effectué à l'aide d'une solution aqueuse acide comprenant un ou plusieurs acides minéraux et/ou organiques de préférence l'acide nitrique, l'acide chlorhydrique, l'acide perchlorique, l'acide sulfurique, les acides faibles dont la solution a un pH inférieur à 4 comme l'acide acétique ou l'acide formique. Généralement, ladite solution aqueuse acide comprend également un ou plusieurs composés pouvant libérer des anions capables de se combiner avec les ions aluminium, de préférence les composés comprenant un ion nitrate (comme le nitrate d'aluminium), chlorure, sulfate, perchlorate, chloroacétate, trichloroacétate, bromoacétate, dibromoacétate, et les anions de formule générale : R-COO comme les formiates et les acétates.
s5) calcination des agglomérés ainsi obtenus à une température comprise entre 850 et 1100°C, préférentiellement entre 875 et 1075°C.

Cette calcination est généralement réalisée afin d'obtenir une surface spécifique du support comprise entre 30 et 130 m²/g et d'obtenir le diffractogrammes de rayons X désiré.

Selon une deuxième variante les supports selon l'invention sont des agglomérés d'alumine se présentant sous forme de matériaux extrudés. Selon cette deuxième variante la préparation du support comprend les étapes suivantes:
s1) malaxage et extrusion d'un matériau à base d'alumine pour le mettre en forme;

Généralement, ledit matériau à base d'alumine est de l'hydrargillite déshydratée. Le matériau à base d'alumine peut aussi généralement être issu de la précipitation de boehmite, pseudo-boehmite ou de bayerite, ou d'un mélange de tels matériaux.

Lors de la mise en forme dudit matériau à base d'alumine, on lui ajoute généralement un ou des matériaux porogènes disparaissant par chauffage. Lesdits matériaux porogènes sont sélectionnés dans le groupe constitué par la farine de bois, le charbon de bois, le soufre, les goudrons, les matières plastiques, les émulsions de matières plastiques, les alcools polyvinyliques et la naphtaline.
s2) traitement thermique à une température comprise entre 200 et 1200 °C des matériaux extrudés ainsi obtenus, de manière à leur procurer une surface spécifique comprise entre 50 et 420 m²/g ;
s3) traitement hydrothermal desdits matériaux extrudés, par imprégnation avec de l'eau ou une solution aqueuse préférentiellement acide, puis séjour dans un autoclave à une température comprise entre 100 et 300°C,de préférence entre 150 et 250°C.

Le traitement hydrothermal est généralement conduit à une température de 100 à 300°C, préférentiellement de 150 à 250°C, pendant une durée supérieure à 45 minutes, préférentiellement de 1 à 24 heures, très préférentiellement de 1,5 à 12 heures. Le traitement hydrothermal est généralement effectué à l'aide d'une solution aqueuse acide comprenant un ou plusieurs acides minéraux et/ou organiques de préférence l'acide nitrique; l'acide chlorhydrique, l'acide perchlorique, l'acide sulfurique, les acides faibles dont la solution a un pH inférieur à 4 comme l'acide acétique ou l'acide formique. Généralement, ladite solution aqueuse acide comprend également un ou plusieurs composés pouvant libérer des anions capables de se combiner avec les ions aluminium, de préférence les composés comprenant un ion nitrate (comme le nitrate d'aluminium), chlorure, sulfate, perchlorate, chloroacétate, trichloroacétate, bromoacétate, dibromoacétate, et les anions de formule générale : R-COO comme les formiates et les acétates.
s4) calcination des agglomérés ainsi obtenus à une température comprise entre 850 et 1100°C, préférentiellement entre 875 et 1075°C.

Cette calcination est généralement réalisée afin d'obtenir une surface spécifique du support comprise entre 30 et 130 m²/g et d'obtenir le diffractogramme de rayons X désiré.

### PRÉPARATION DES CATALYSEURS

Les catalyseurs sont préparés par toute méthode connue de l'homme du métier.

### c1) Préparation d'une solution comprenant le nickel

Le sel précurseur du nickel est généralement sélectionné dans le groupe constitué par le chlorure de nickel, le nitrate de nickel et le sulfate de nickel. De manière très préférée, le sel précurseur du nickel est le nitrate de nickel. La solution est préparée par mise en solution du précurseur de nickel à une concentration comprise entre 0 et la limite de solubilité du précurseur utilisé. La concentration est ajustée selon la teneur massique en nickel voulue sur le catalyseur.

### c2) Imprégnation de la solution sur le support alumine

L'imprégnation du support alumine peut être réalisée par imprégnation à sec ou en excès, en mode statique ou dynamique. L'imprégnation peut être réalisée en une ou plusieurs imprégnations successives.

### c3) Séchage du catalyseur

Le catalyseur imprégné est généralement séché afin d'éliminer toute ou une partie de l'eau introduite lors de l'imprégnation, de préférence à une température comprise entre 50 et 250°C, de manière plus préférée entre 70°C et 200°C. Le séchage est effectué sous air, ou sous atmosphère inerte (azote par exemple).

### c4) Calcination du catalyseur

Le catalyseur est ensuite généralement calciné sous air. La température de calcination est généralement comprise entre 250°C et 900°C, de préférence comprise entre environ 300°C et environ 500°C. La durée de calcination est généralement comprise entre 0,5 heures et 5 heures.

### c5) Activation par réduction du catalyseur obtenu à l'étape précédente (étape optionnelle)

Le catalyseur obtenu à l'issue de l'étape c3) ou c4) est généralement réduit. Cette étape est de préférence réalisée en présence d'un gaz réducteur, de préférence au moyen d'hydrogène gazeux in-situ, c'est-à-dire dans le réacteur où est réalisée la transformation catalytique. De manière préférée, cette étape est effectuée à une température comprise entre 100°C et 600 °C, de manière encore plus préférée entre 200°C et 500°C.

### c5') Passivation-Activation (étape optionnelle)

Selon une variante, les catalyseurs nickel sont passivés à l'issue de l'étape c3) ou c4) par le soufre par toute méthode connue de l'homme du métier. A titre d'exemple, les catalyseurs à base de nickel peuvent être activés ex-situ selon l'une des méthode décrites dans les brevet EP466567(B1), US5153163 et FR2676184. Le catalyseur est ensuite généralement réduit de préférence au moyen d'hydrogène gazeux à une température comprise entre 100°C et 400°C, de manière encore plus préférée entre 150°C et 350°C.

Selon une variante décrite dans le brevet US 5153163, les catalyseurs nickel sont passivés à l'issue de l'étape c3) ou c4) par le soufre. Un volume d'une solution aqueuse qui correspond au volume poreux du catalyseur à imprégner, et contenant du di-éthanol di-sulfure (DEODS) et de l'acide formique peut être préparée. La quantité en soufre introduite est généralement ajustée de façon à introduire en moyenne entre 0,25 et 0,35 de préférence 0,3 moles de soufre par mole de nickel en surface des particules de nickel. Cette solution est ensuite imprégnée sur le catalyseur obtenu. Le catalyseur est ensuite généralement soumis à un traitement thermique à une température comprise entre 100 et 250°C pendant une durée comprise entre 0,5 et 1,5 heures.

Selon une autre variante de préparation du catalyseur, le catalyseur est préparé en plusieurs imprégnations.

Pour les catalyseurs préparés en deux imprégnations, les enchaînements peuvent être les suivants :
- Imprégnation n°1 - Séchage - Imprégnation n°2 - Séchage - Calcination
- Imprégnation n°1 - Séchage - Calcination - Imprégnation n°2 - Séchage - Calcination

L'invention concerne aussi le catalyseur obtenu à partir des procédés de préparation de catalyseur décrits dans la présente invention.

### CARACTÉRISATION DU SUPPORT

Les diagrammes des différents supports ont été enregistrés sur un diffractomètre (X'PERT'Pro de PANalytical) en géométrie Bragg-Brentano, équipé d'un tube de cuivre (1,54 Å), d'un compteur proportionnel et de fentes à ouverture variable en fonction de 2θ. La surface d'échantillon irradié est de 10x10mm, le pas d'échantillonnage de 0,05°2θ, le temps par pas de 5 à 15s.

Après enregistrement, les intensités ont été corrigées et transformées en intensités à volume irradié constant.

La mesure des positions, intensités relatives et largeurs des raies diffractées ont été déterminées par modélisation complète des diffractogrammes à l'aide de fonctions analytiques de type pseudo-Voigt symétriques, de rapport Gaussienne-Lorentzienne fixé à 0.6.

Les positions, les intensités et les largeurs des fonctions ont été affinées pour ajuster les profils calculés aux raies expérimentales.

Les paramètres affinés des raies calculées qualifient les raies expérimentales :
o positions (distances interréticulaires)
o intensité
o FWHM (*full width at half the maximum*, largeur à mi-hauteur)

Un fond de diffusion linéaire a été ajusté en même temps que les profils de raies. Certaines raies extrêmement larges et peu intenses, indispensables à la qualité de l'affinement du diagramme expérimental mais manifestement non définies ont été considérées comme un supplément de fond de diffusion.

Les intensités relatives reportées ici sont exprimées en pourcentage de la hauteur de la raie la plus intense (d=1,39Â), au dessus du fond de diffusion.

Les largeurs de raies sont qualifiées (fine (F), normale (N), large (L), très large (TL)) selon la gamme de largeur à mi hauteur (FWHM) du profil calculé pour chaque raie expérimentale. Les largeurs exprimées en 2 theta sont dépendantes de l'appareillage utilisé pour l'analyse et de la longueur d'onde utilisée pour l'analyse. Par contre, la qualification des raies (fine (F), normale (N), large (L), très large (TL)) déduite de ces valeurs est valable quel que soit le type d'appareil et les conditions d'analyse utilisées. Le classement relatif des raies, par rapport à leur largeur à mi-hauteur, les unes par rapport aux autres est valable quel que soit le type d'appareil et les conditions d'analyse utilisées.

La qualification des largeurs de raie est donnée ci dessous :

| Largeur de raie mesurée à mi-hauteur, dans nos conditions d'analyse (en degré 2 theta) | Qualification de la largeur de raies |
|---|---|
| <0,7 | Fine (F) |
| 0,7-1.0 | Normale (N) |
| 1-1.8 | Large (L) |
| 1,8-3 | Très Large (TL) |

Pour les catalyseur selon l'invention, comprenant du nickel sur un support oxyde d'aluminium, le support d'oxyde d'aluminium présente généralement à l'état calciné un diffractogramme obtenu par diffractométrie de rayons X comprenant des raies qui correspondent aux distances interréticulaires, aux intensités relatives et aux largeurs de raie suivantes:

| Distances interréticulaires d (10⁻¹⁰ m) | Intensités relatives I/Io (en %) | Largeur de raie |
|---|---|---|
| 5,03 à 5,22 | 1-5 | N à TL |
| 4,56 à 4,60 | 1-10 | FàTL |
| 4,06 à 4,10 | 1-5 | NàL |
| 2,80 à 2,85 | 5-20 | TL |
| 2,73 | 15-35 | N |
| 2,60 | 5-10 | L |
| 2,43 | 35-40 | TL |
| 2,29 | 30-4.0 | N |
| 1,99 | 60-95 | N |
| 1,95 | 25-50 | FàN |
| 1,79 | 1-10 | NàTL |
| 1,53 | 5-10 | N à L |
| 1,51 | 5-10 | LàTL |
| 1,41 | 40-60 | NàL |
| 1,39 | 100 | N |
| 1,23 à 1,26 | 1-5 | TL |
| 1,14 | 5-10 | NàL |
| 1,11 | 1-5 | L |
| 1,04 | 1-5 | TL |
| 1,00 | 5-10 | TL |
| 0,97 | 1-5 | L à TL |

Selon un mode préféré, le support alumine présente à l'état calciné un diffractogramme comprenant uniquement des raies qui correspondent aux distances interréticulaires, aux intensités relatives et aux largeurs de raie suivantes :

| Distances interréticulaires d (10⁻¹⁰ m) | Intensité relative I/Io (en %) | Largeur de raie |
|---|---|---|
| 5,41 à 5,47 | 0-5 | N |
| 5,03 à 5,22 | 1-5 | N à TL |
| 4,56 à 4,60 | 1-10 | FàTL |
| 4,06 à 4,10 | 1-5 | NàL |
| 2,86 à 2,88 | 5-20 | FàN |
| 2,80 à 2,85 | 5-20 | TL |
| 2,73 | 15-35 | N |
| 2,60 | 5-10 | L |
| 2,43 | 35-40 | TL |
| 2,29 | 30-40 | N |
| 1,99 | 60-95 | N |
| 1,95 | 25-50 | F à N |
| 1,92 | 0-20 | NàTL |
| 1,79 | 1-10 | NàL |
| 1.53 | 5-10 | NàL |
| 1,51 | 5-10 | LàTL |
| 1,45 | 0-10 | L |
| 1,43 | 0-10 | N |
| 1,41 | 40-60 | NàL |
| 1,39 | 100 | N |
| 1,23 à 1,26 | 1-5 | TL |
| 1,14 | 5-10 | NàL |
| 1,11 | 1-5 | L |
| 1,04 | 1-5 | TL |
| 1,00 | 5-10 | TL |
| 0,97 | 1-5 | LàTL |

Par ailleurs, le rapport des intensités relatives aux distances interréticulaires respectives de 1,99.10⁻¹⁰ m et 1,95.10⁻¹⁰ m est tel que :
(I/I₀)_{1.99}/(I/I₀)_{1,95} est compris entre 1,2 et 3,8, de préférence entre 1,5 et 2,5.

### UTILISATION DU CATALYSEUR SELON L'INVENTION

Le catalyseur selon l'invention peut être utilisé dans les procédés faisant intervenir une transformation de composés organiques. Ainsi, le catalyseur selon l'invention peut être utilisé dans les procédés comprenant des réactions d'hydrogénation des composés comportant des fonctions aromatiques, cétones, aldéhydes, acides ou nitro, l'hydrogénation du monoxyde de carbone en alcools C1-C6, en méthanol ou en diméthyl-éther, les réactions d'isomérisation ou d'hydro-isomérisation, d'hydrogénolyse, et d'une manière générale les réactions faisant intervenir des coupures ou des formations de liaisons carbone-carbone.

Les conditions opératoires généralement utilisées pour ces réactions sont les suivantes: une température comprise entre 0°C et 500°C, de préférence entre 25 et 350°C, une pression comprise entre 0,1 et 20 MPa, de préférence entre 0,1 et 10 MPa, une vitesse volumique horaire (V.V.H.) comprise entre 0,1 et 50 h⁻¹, de préférence entre 0,5 et 20 h⁻¹ pour une charge liquide; et entre 500 et 30 000 h⁻¹, de préférence entre 500 et 15 000 h⁻¹ pour une charge gazeuse. Lorsque de l'hydrogène est présent, le rapport molaire hydrogène sur charge est compris entre 1 et 500 litres par litre, de préférence entre 10 et 150 litres par litre.

La mise en oeuvre du catalyseur selon l'invention et les conditions de son utilisation doivent être adaptées par l'utilisateur à la réaction et à la technologie utilisée.

Le catalyseur selon l'invention peut aussi être utilisé dans les réactions d'hydrogénation des composés comportant des fonctions acétyléniques, diéniques, oléfiniques.

L'invention concerne aussi le procédé d'hydrogénation sélective par mise en contact d'une charge sur le catalyseur selon l'invention ou sur le catalyseur préparé selon l'invention, ladite charge étant sélectionnée dans le groupe constitué par les coupes C3 de vapocraquage, les coupes C4 de vapocraquage, les coupes C5 de vapocraquage et les essences de vapocraquage appelée aussi essences de pyrolyse.

Selon une application préférée, les catalyseurs selon l'invention sont mis en oeuvre pour les réactions d'hydrogénation sélective des coupes poly-insaturées d'hydrocarbures issues de vapocraquage et/ou de craquage catalytique, de préférence des coupes poly-insaturées d'hydrocarbures issues du vapocraquage.

### Hydrogénation des coupes C3 à C5

Les procédés de conversion des hydrocarbures tels que le vapocraquage ou le craquage catalytique sont opérés à haute température et produisent une grande variété de molécules insaturées telles que l'éthylène, le propylène, les butènes linéaires, l'isobutène, les pentènes ainsi que des molécules insaturées contenant jusqu'à environ 15 atomes de carbone.

En parallèle sont également formés des composés polyinsaturés : acétylène, propadiène et méthylacétylène (ou propyne), 1-2 et 1-3 butadiène, vinylacétylène et éthylacétylène, et d'autres composés polyinsaturés dont le point d'ébullition correspond à la fraction essence C5+.

Tous ces composés polyinsaturés doivent être éliminés pour permettre l'utilisation de ces différentes coupes dans les procédés de pétrochimie tels que les unités de polymérisation.

Ainsi, par exemple, la coupe C3 de vapocraquage peut avoir la composition moyenne suivante : de l'ordre de 90% poids propylène, de l'ordre de 3 à 8% poids de propadiène et méthylacétylène, le reste étant essentiellement du propane. Dans certaines coupes C3, entre 0,1 et 2% poids de C2 et de C4 peut aussi être présent. Les spécifications concernant les concentrations de ces composés polyinsaturés pour les unités de pétrochimie et de polymérisation sont très basses: 20-30 ppm poids de MAPD (MéthylAcétylène et PropaDiène) pour le propylène qualité chimique et moins de 10 ppm poids voire jusqu'à 1 ppm poids pour la qualité « polymérisation ».

Une coupe C4 de vapocraquage présente par exemple la composition molaire moyenne suivante : 1 % de butane, 46,5% de butène, 51% de butadiène, 1,3% de VinylAcetylène (VAC) et 0,2% de butyne. Dans certaines coupes C4, entre 0,1 et 2% poids de C3 et de C5 peut aussi être présent. Là encore les spécifications sont sévères : teneur en dioléfines strictement inférieure à 10 ppm poids pour une coupe C4 qui sera utilisée en pétrochimie ou polymérisation.

Une coupe C5 de vapocraquage présente par exemple la composition moyenne en masse suivante : 21% de pentanes, 45% de pentènes, 34% de pentadiènes.

Le procédé d'hydrogénation sélective s'est progressivement imposé pour éliminer les composés polyinsaturés des coupes pétrolières C3 à C5 citées car ce procédé permet la conversion des composés les plus insaturés vers les alcènes correspondants en évitant la saturation totale et donc la formation des alcanes correspondent.

L'hydrogénation sélective peut être réalisée en phase gaz ou liquide, de préférence en phase liquide. En effet, une réaction en phase liquide permet d'abaisser le coût énergétique et d'augmenter la durée de cycle des catalyseurs.

Pour une réaction en phase liquide, la pression est généralement comprise entre 1 et 3 MPa, la température entre 2 et 50°C et le ratio molaire hydrogène/(composés polyinsaturés à hydrogéner) entre 0,1 et 4, de préférence entre 1 et 2.

Pour une réaction d'hydrogénation en phase gazeuse, la pression est généralement comprise entre 1 et 3 MPa, la température entre 40 et 120°C et le ratio molaire hydrogène/(composés polyinsaturés à hydrogéner) entre 0,1 et 4, de préférence entre 1 et 2.

### Hydrogénation des essences de vapocraquage

Le vapocraquage produit principalement de l'éthylène, du propylène, une coupe C4 ainsi que de l'essence de vapocraquage appelée aussi essence de pyrolyse.

Selon un autre mode préféré, la charge est une essence de pyrolyse. L'essence de pyrolyse correspond à une coupe dont la température d'ébullition est généralement comprise entre 0°C et 250°C, de préférence entre 10°C et 220°C. Cette charge comprend généralement la coupe C5-C12 avec des traces de C3, C4, C13, C14, C15 (par exemple entre 0,1 à 3% poids pour chacune de ces coupes).

Par exemple, une coupe C5-200°C a généralement une composition en % poids suivante:
Paraffines 8 - 12
Aromatiques 58 - 62
Mono-oléfines 8 - 10
Dioléfines 18 - 22
Soufre 20 - 300 ppm

L'hydrogénation sélective d'une essence de pyrolyse consiste à mettre en contact la charge à traiter avec de l'hydrogène introduit en excès dans un ou plusieurs réacteurs contenant le catalyseur d'hydrogénation.

Le débit d'hydrogène est ajusté afin d'en disposer en quantité suffisante pour hydrogéner théoriquement l'ensemble des dioléfines, des acétyléniques et des alkényl aromatiques et de maintenir un excès d'hydrogène en sortie de réacteur. Afin de limiter le gradient de température dans le réacteur, il peut être avantageux de recycler une fraction de l'effluent à l'entrée et/ou au milieu du réacteur.

Dans le cas d'une hydrogénation sélective d'essence de pyrolyse, le ratio molaire hydrogène/(composés polyinsaturés à hydrogéner) est généralement compris entre 1 et 2, la température est généralement comprise entre 40°C et 200°C, de préférence entre 50 et 180°C, la vitesse horaire spatiale (correspondant au volume d'hydrocarbure par volume de catalyseur et par heure) est comprise généralement entre 0,5 h-1 et 10 h-1, de préférence entre 1 h-1 et 5 h-1 et la pression est généralement comprise entre 1,0 MPa et 6,5 MPa, de préférence entre 2,0 MPa et 3,5 MPa.

### EXEMPLE

### Exemple 1: Catalyseur à (selon l'invention)

Le support du catalyseur A est préparé selon la première variante du mode de préparation du support. Les étapes de préparation du support du catalyseur A se présentant sous forme de billes sont les suivantes:
s1) déshydratation par calcination flash d'hydrargillite afin d'obtenir une poudre d'alumine active. Un courant de gaz chaud permet d'éliminer et d'entraîner très rapidement l'eau évaporée. La température est fixée à 800°C et le temps de contact du matériau à déshydrater avec les gaz est de 1 seconde. La poudre d'alumine active obtenue est broyée puis est lavée avec de l'eau.
s2) mise en forme de ladite poudre d'alumine active de manière à obtenir des billes d'une densité de remplissage en cru de 785 kg/m3 et d'un diamètre compris majoritairement entre 2 et 4 mm.

La mise en forme de ladite poudre d'alumine active de manière à obtenir des billes, nommée granulation, est réalisée au moyen d'un drageoir tournant.
s3) traitement thermique à 7 20°C des dites billes de manière à leur procurer une surface spécifique de 200 m2/g.
s4) traitement hydrothermal desdites billes par imprégnation avec une solution aqueuse acide. Le traitement hydrothermal est conduit à une température de 200°C durant 6,5 heures, dans un autoclave à panier rotatif, et la solution d'imprégnation est une solution aqueuse acide comprenant du nitrate d'aluminium.
s5) calcination des agglomérés ainsi obtenus à une température de 950°C pendant 2 heures. Les agglomérés obtenus présentent une surface spécifique de 67 m2/g.

La signature DRX du support préparé est la suivante :

| d (A) +/- 0.01 | l/lo (%) | largeur de raies |
|---|---|---|
| 5,18 | 3 | TL |
| 4,58 | 4 | TL |
| 4,09 | 1 | L |
| 2,81 | 14 | TL |
| 2,73 | 17 | N |
| 2,61 | 7 | L |
| 2,43 | 35 | TL |
| 2,29 | 31 | N |
| 1,99 | 73 | N |
| 1,95 | 38 | N |
| 1,79 | 5 | TL |
| 1,53 | 6 | L |
| 1,51 | 6 | L |
| 1,41 | 41 | N |
| 1,39 | 100 | N |
| 1,26 | 3 | TL |
| 1,14 | 7 | L |
| 1,11 | 1 | L |
| 1,04 | 5 | TL |
| 1,00 | 8 | TL |
| 0,97 | 3 | TL |

Une solution aqueuse de nitrate de nickel Ni(NO₃)₂ est préparée à 25°C par dilution de 49,5 g de nitrate de nickel hexahydraté dans de l'eau déminéralisée à un volume qui correspond au volume poreux du support alumine. Cette solution est ensuite imprégnée sur 100 grammes du support alumine préparé.

Le catalyseur A obtenu est séché sous air à 120°C, puis est calciné pendant 2 heures à 450°C sous air. Le catalyseur A contient 10 % poids de Nickel.

### Exemple 2: Catalyseur B (non conforme)

Le support du catalyseur B est préparé selon la première variante du mode de préparation du support. Les conditions opératoires et la méthode de préparation du support sont les mêmes à celles mise en oeuvre dans l'exemple 1 hormis la calcination de l'étape s5) qui est réalisée à 650°C pendant 2 heures. Elle procure aux agglomérés une surface spécifique de 142 m²/g.

La signature DRX du support préparé est la suivante :

| d (A) +/- 0.01 | l/lo (%) | largeur de raies |
|---|---|---|
| 4,55 | 7 | TL |
| 2,73 | 19 | TL |
| 2,41 | 49 | TL |
| 2,28 | 23 | F |
| 2,12 | 8 | TL |
| 1,99 | 54 | L |
| 1,95 | 31 | N |
| 1,52 | 14 | TL |
| 1,41 | 22 | TL |
| 1,39 | 100 | L |

Une solution aqueuse de nitrate de nickel Ni(NO₃)₂ est préparée à 25°C par dilution de 75,4 g de nitrate de nickel hexahydraté dans de l'eau déminéralisée à un volume qui correspond au volume poreux du support alumine préparé. Celle solution est ensuite imprégnée sur 100 grammes du support préparé.

Le catalyseur B obtenu est séché sous air à 120°C, puis est calciné pendant 2 heures à 450°C sous air. Le catalyseur B contient 15 % poids de nickel.

### Exemple 3: Catalyseur C (selon l'invention)

Comme décrit dans le brevet US 5153163 un volume d'une solution aqueuse qui correspond au volume poreux du catalyseur à imprégner, et contenant 1,7 g de di-éthanol di-sulfure (DEODS) et 10,2 g d'acide formique est préparée. La quantité en soufre introduite est ajustée de façon à introduire en moyenne 0,3 moles de soufre par mole de nickel en surface des particules de nickel. Cette solution est ensuite imprégnée sur 100 g du catalyseur A. Le catalyseur est ensuite soumis à un traitement thermique à 150°C, pendant 1 heure. Le catalyseur C ainsi préparé contient 10 % poids de Ni et 0,7 % poids de soufre.

### Exemple 5: Catalyseur D (non conforme)

Comme décrit dans le brevet US 5153163, un volume d'une solution aqueuse qui correspond au volume poreux du catalyseur à imprégner, et contenant 3,6 g de di-éthanol di-sulfure (DEODS) et 15,6 g d'acide formique est préparée. La quantité en soufre introduite est ajustée de façon à introduire en moyenne 0,3 moles de S par mole de nickel en surface des particules de nickel. Cette solution est ensuite imprégnée sur 100 g du catalyseur B. Le catalyseur est ensuite soumis à un traitement thermique à 150°C pendant 1 heure. Le catalyseur D ainsi préparé contient 15 % poids de Ni et 1,4 % poids de soufre.

### Exemple 6: Test catalytique en hydrogénation d'un mélange styrène isoprène en présence de S.

Avant le test catalytique, les catalyseurs A et B sont traités sous un flux de 1 litre d'hydrogène par heure et par gramme de catalyseur avec une montée en température de 300°C/h et un palier à 410°C pendant 16 heures.

Avant le test catalytique, les catalyseurs C et D sont traités sous un flux de 1 litre d'hydrogène par heure et par gramme de catalyseur avec une montée en température de 300°C/h et un palier à 300°C pendant 16 heures.

Les catalyseurs sont ensuite soumis à un test d'hydrogénation dans un réacteur discontinu parfaitement agité de type « Grignard ». Pour ce faire, 4 ml de billes de catalyseur réduit sont fixées à l'abri de l'air dans un panier annulaire situé autour du mobile d'agitation. Les paniers utilisés dans les réacteurs sont de type Robinson Mahonnay.

L'hydrogénation est réalisée en phase liquide.

La composition de la charge est la suivante : 8% poids styrène, 8% poids isoprène, 10 ppm de S introduits sous forme de pentanethiol, 100 ppm de S introduits sous forme de thiophène, le solvant étant du n-heptane.

Le test est réalisé sous une pression constante de 3,5 MPa d'hydrogène et à une température de 60 °C. Les produits de la réaction sont analysés par chromatographie en phase gazeuse.

Les activités catalytiques sont exprimées en moles de H₂ consommées par minute et par gramme de nickel et sont reportées dans le tableau 1.

**Tableau 1: Activités mesurées en hydrogénation d'un mélange styrène-isoprène en présence de soufre**

| Catalyseur | Activité* |
|---|---|
| Catalyseur A (conforme) | 7,4.10⁻³ |
| Catalyseur B (non conforme) | 4,7.10⁻³ |
| Catalyseur C (conforme) | 7,3.10⁻³ |
| Catalyseur D (non conforme) | 3,5.10⁻³ |

| | |
|---|---|
| * en (moles H₂)/[min×(gramme de nickel)] | |

Les catalyseurs A et C conformes à l'invention sont environ 1,5 à 2 fois plus actifs que les catalyseurs B et D non conformes.

## Revendications

1. Catalyseur comprenant du nickel sur un support oxyde d'aluminium, ledit support d'oxyde d'aluminium présentant à l'état calciné un diffractogramme obtenu par diffractométrie de rayons X comprenant des raies qui correspondent aux distances interréticulaires d et aux intensités relatives l/lo suivantes :
| Distances interréticulaires d (10⁻¹⁰ m) | Intensités relatives l/lo (en %) |
|---|---|
| 5,03 à 5,22 | 1-5 |
| 4;56 à 4,60 | 1-10 |
| 4,06 à 4,10 | 1-5 |
| 2,80 à 2,85 | 5-20 |
| 2,73 | 15-35 |
| 2,60 | 5-10 |
| 2,43 | 35-40 |
| 2,29 | 30-40 |
| 1,99 | 60-95 |
| 1,95 | 25-50 |
| 1,79 | 1-10 |
| 1,53 | 5-10 |
| 1,51 | 5-10 |
| 1,41 | 40-60 |
| 1,39 | 100 |
| 1,23 à 1,26 | 1-5 |
| 1,14 | 5-10 |
| 1,11 | 1-5 |
| 1,04 | 1-5 |
| 1,00 | 5-10 |
| 0,97 | 1-5 |

2. Catalyseur selon la revendication 1 dans lequel le support d'oxyde d'aluminium présente à l'état calciné un diffractogramme comprenant uniquement des raies qui correspondent aux distances interréticulaires et aux intensités relatives suivantes :
| Distances interréticulaires d (10⁻¹⁰ m) | Intensité relative l/lo (en %) |
|---|---|
| 5,41 à 5,47 | 0-5 |
| 5,03 à 5,22 | 1-5 |
| 4,56 à 4,60 | 1-10 |
| 4,06 à 4,10 | 1-5 |
| 2,86 à 2,88 | 5-20 |
| 2,80 à 2,85 | 5-20 |
| 2,73 | 15-35 |
| 2,6 | 5-10 |
| 2,43 | 35-40 |
| 2,29 | 30-40 |
| 1,99 | 60-95 |
| 1,95 | 25-50 |
| 1,92 | 0-20 |
| 1,79 | 1-10 |
| 1,53 | 5-10 |
| 1,51 | 5-10 |
| 1,45 | 0-10 |
| 1,43 | 0-10 |
| 1,41 | 40-60 |
| 1,39 | 100 |
| 1,23 à 1,26 | 1-5 |
| 1,14 | 5-10 |
| 1,11 | 1-5 |
| 1,04 | 1-5 |
| 1 | 5-10 |
| 0,97 | 1-5 |

3. Catalyseur selon la revendication 1 dans lequel le support d'oxyde d'aluminium présente à l'état calciné un diffractogramme comprenant des raies qui correspondent aux distances interréticulaires, aux intensités relatives et aux largeurs de raie suivantes :
| Distances interréticulaires d (10⁻¹⁰ m) | Intensités relatives l/lo (en %) | Largeur de raie |
|---|---|---|
| 5,03 à 5,22 | 1-5 | N à TL |
| 4,56 à 4,60 | 1-10 | F à TL |
| 4,06 à 4,10 | 1-5 | NàL |
| 2,80 à 2,85 | 5-20 | TL |
| 2,73 | 15-35 | N |
| 2,60 | 5-10 | L |
| 2,43 | 35-40 | TL |
| 2,29 | 30-40 | N |
| 1,99 | 60-95 | N |
| 1,95 | 25-50 | F à N |
| 1,79 | 1-10 | N à TL |
| 1,53 | 5-10 | NàL |
| 1,51 | 5-10 | LàTL |
| 1,41 | 40-60 | NàL |
| 1,39 | 100 | N |
| 1,23 à 1,26 | 1-5 | TL |
| 1,14 | 5-10 | NàL |
| 1,11 | 1-5 | L |
| 1,04 | 1-5 | TL |
| 1,00 | 5-10 | TL |
| 0,97 | 1-5 | LàTL |

4. Catalyseur selon la revendication 2 dans lequel le support d'oxyde d'aluminium présente à l'état calciné un diffractogramme comprenant uniquement des raies qui correspondent aux distances interréticulaires, aux intensités relatives et aux largeurs de raie suivantes :
| Distances interréticulaires d (10⁻¹⁰ m) | Intensité relative l/lo (en %) | Largeur de raie |
|---|---|---|
| 5,41 à 5,47 | 0-5 | N |
| 5,03 à 5,22 | 1-5 | N à TL |
| 4,56 à 4,60 | 1-10 | F à TL |
| 4,06 à 4,10 | 1-5 | NàL |
| 2,86 à 2,88 | 5-20 | F à N |
| 2,80 à 2,85 | 5-20 | TL |
| 2,73 | 15-35 | N |
| 2,60 | 5-10 | L |
| 2,43 | 35-40 | TL |
| 2,29 | 30-40 | N |
| 1,99 | 60-95 | N |
| 1,95 | 25-50 | F à N |
| 1,92 | 0-20 | NàTL |
| 1,79 | 1-10 | NàL |
| 1,53 | 5-10 | NàL |
| 1,51 | 5-10 | LàTL |
| 1,45 | 0-10 | L |
| 1,43 | 0-10 | N |
| 1,41 | 40-60 | NàL |
| 1,39 | 100 | N |
| 1,23 à 1,26 | 1-5 | TL |
| 1,14 | 5-10 | NàL |
| 1,11 | 1-5 | L |
| 1,04 | 1-5 | TL |
| 1,00 | 5-10 | TL |
| 0,97 | 1-5 | L à TL |

5. Catalyseur selon l'une des revendications 1 à 4 dans lequel la teneur en nickel dans le catalyseur est comprise entre 1 et 50 % poids et la surface spécifique du support est comprise entre 30 et 130 m²/g.

6. Catalyseur selon l'une des revendications 1 à 5 dans lequel le diffractogramme du catalyseur sous forme oxyde comprend, en plus des raies caractéristiques du support, les raies caractéristiques du nickel, sous forme oxyde, à des distances interréticulaires d (exprimée eh 10⁻¹⁰m) de : 2,41, 2,09, 1,48, 1,25, 1,21, 1,04, 0,96, 0,93, 0,85, 0,80.

7. Catalyseur selon l'une des revendications 1 à 5 dans lequel le diffractogramme du catalyseur sous forme réduite et passivée à l'air comprend, en plus des raies caractéristiques du support, les raies caractéristiques du nickel sous forme réduite, à des distances interréticulaires d (en 10⁻¹⁰m) de : 2,03, 1,76, 1,25, 1,06, 1,02, 0,88, 0,81, 0,79.

8. Catalyseur selon l'une des revendications 1 à 7 dans lequel le rapport des intensités relatives aux distances interréticulaires respectives de 1,99.10⁻¹⁰ m et 1,95.10⁻¹⁰ m est tel que (l/l₀)_{1,99}/(l/l₀)_{1,95} est compris entre 1,2 et 3,8.

9. Procédé de préparation du support du catalyseur selon l'une des revendications 1 à 8 dans lequel le support est un aggloméré d'alumine se présentant sous forme de billes, ledit procédé comprenant les étapes suivantes:
s1) déshydratation par calcination flash d'un hydroxyde ou d'un oxyhydroxyde d'aluminium pour obtenir une poudre d'alumine active, ladite calcination flash étant un chauffage à l'aide d'un courant de gaz chaud à une température comprise entre 400 et 1200°C pendant une durée comprise entre 0,1 seconde et 5 secondes.
s2) mise en forme de ladite poudre d'alumine active de manière à obtenir des billes d'une densité de remplissage en cru comprise entre 500 et 1100 kg/m3 et d'un diamètre compris majoritairement entre 0,8 et 10 mm,
s3) traitement thermique à une température comprise entre 200 et 1200 °C desdites billes de manière à leur procurer une surface spécifique comprise entre 50 et 420 m²/g,
s4) traitement hydrothermal desdites billes par imprégnation avec de l'eau ou une solution aqueuse, puis séjour dans un autoclave à une température comprise entre 100 et 300°C pendant une durée supérieure à 45 minutes,
s5) calcination des agglomérés ainsi obtenus à une température comprise entre 850 et 1100°C.

10. Procédé de préparation du support selon la revendication 9 dans lequel la poudre d'alumine active obtenue après la déshydratation de l'hydroxyde ou de l'oxyhydroxyde d'aluminium est broyée.

11. Procédé de préparation du support selon l'une des revendications 9 ou 10 dans lequel la poudre d'alumine active obtenue après la déshydratation de l'hydroxyde ou de l'oxyhydroxyde d'aluminium est lavée avec de l'eau ou une solution aqueuse acide.

12. Procédé de préparation du support du catalyseur selon les revendication 1 à 8 dans lequel le support est un aggloméré d'alumine se présentant sous forme de matériaux extrudés, ledit procédé comprenant les étapes suivantes:
s1) malaxage et extrusion d'un matériau à base d'alumine pour le mettre en forme ;
s2) traitement thermique à une température comprise entre 200 et 1200 C des matériaux extrudés ainsi obtenus, de manière à leur procurer une surface spécifique comprise entre 50 et 420 m²/g ;
s3) traitement hydrothermal desdits matériaux extrudés, par imprégnation avec de l'eau ou une solution aqueuse, puis séjour dans un autoclave à une température comprise entre 100 et 300°C, pendant une durée supérieure à 45 minutes,
s4) calcination des agglomérés ainsi obtenus à une température comprise entre 850 et 1100°C.

13. Procédé de préparation du support selon la revendication 12 dans lequel ledit matériau à base d'alumine est de l'hydrargillite déshydratée.

14. Procédé-de-préparation du support selon la revendication 12 dans lequel ledit matériau à base d'alumine est issu de la précipitation de boehmite, pseudo-boehmite ou de bayerite, ou d'un mélange de tels matériaux.

15. Procédé de préparation du support selon l'une des revendications 9 à 14 dans lequel lors de la mise en forme de ladite poudre d'alumine ou dudit matériau à base d'alumine, on lui ajoute un ou des matériaux porogènes.

16. Procédé de préparation du support selon l'une des revendications 15 dans lequel lesdits matériaux porogènes sont sélectionnés dans le groupe constitué par la farine de bois, le charbon de bois, le soufre, les goudrons, les matières plastiques, les émulsions de matières plastiques, les alcools polyvinyliques et la naphtaline.

17. Procédé de préparation du support l'une des revendications 9 à 16 dans lequel le traitement hydrothermal est effectué à l'aide d'une solution aqueuse acide comprenant un ou plusieurs acides minéraux et/ou organiques.

18. Procédé de préparation du support selon la revendication 17 dans lequel le traitement hydrothermal est effectué à l'aide d'une solution aqueuse acide comprenant au moins un acide sélectionné dans le groupe constitué par l'acide nitrique, l'acide chlorhydrique, l'acide perchlorique, l'acide sulfurique, l'acide acétique et l'acide formique.

19. Procédé d'hydrogénation sélective dans lequel le catalyseur selon l'une des revendications 1 à 9 est mis en contact avec une charge sélectionnée dans le groupe constitué par les coupes C3 de vapocraquage, les coupes C4 de vapocraquage, les coupes C5 de vapocraquage et les essences de vapocraquage.

## Claims

1. A catalyst comprising nickel on an aluminium oxide support, said aluminium oxide support having, in the calcined state, a diffractogram obtained by X ray diffractometry comprising peaks which correspond to the following interplanar spacings d and relative intensities I/I₀:
| Interplanar spacings d (10⁻¹⁰ m) | Relative intensities I/I₀ (%) |
|---|---|
| 5.03 to 5.22 | 1-5 |
| 4.56 to 4.60 | 1-10 |
| 4.06 to 4.10 | 1-5 |
| 2.80 to 2.85 | 5-20 |
| 2.73 | 15-35 |
| 2.60 | 5-10 |
| 2.43 | 35-40 |
| 2.29 | 30-40 |
| 1.99 | 60-95 |
| 1.95 | 25-50 |
| 1.79 | 1-10 |
| 1.53 | 5-10 |
| 1.51 | 5-10 |
| 1.41 | 40-60 |
| 1.39 | 100 |
| 1.23 to 1.26 | 1-5 |
| 1.14 | 5-10 |
| 1.11 | 1-5 |
| 1.04 | 1-5 |
| 1.00 | 5-10 |
| 0.97 | 1-5 |

2. A catalyst according to claim 1, in which the aluminium oxide support has, in the calcined state, a diffractogram comprising only the following peaks which correspond to the following interplanar spacings and relative intensities:
| Interplanar spacings d (10⁻¹⁰ m) | Relative intensities I/I₀ (%) |
|---|---|
| 5.41 to 5.47 | 0-5 |
| 5.03 to 5.22 | 1-5 |
| 4.56 to 4.60 | 1-10 |
| 4.06 to 4.10 | 1-5 |
| 2.86 to 2.88 | 5-20 |
| 2.80 to 2.85 | 5-20 |
| 2.73 | 15-35 |
| 2.60 | 5-10 |
| 2.43 | 35-40 |
| 2.29 | 30-40 |
| 1.99 | 60-95 |
| 1.95 | 25-50 |
| 1.92 | 0-20 |
| 1.79 | 1-10 |
| 1.53 | 5-10 |
| 1.51 | 5-10 |
| 1.45 | 0-10 |
| 1.43 | 0-10 |
| 1.41 | 40-60 |
| 1.39 | 100 |
| 1.23 to 1.26 | 1-5 |
| 1.14 | 5-10 |
| 1.11 | 1-5 |
| 1.04 | 1-5 |
| 1 | 5-10 |
| 0.97 | 1-5 |

3. A catalyst according to claim 1, in which the aluminium oxide support has, in the calcined state, a diffractogram comprising peaks which correspond to the following interplanar spacings, relative intensities and peak widths:
| Interplanar spacings d (10⁻¹ m) | Relative intensities I/I₀ (%) | Peak width |
|---|---|---|
| 5.03 to 5.22 | 1-5 | N to VW |
| 4.56 to 4.60 | 1-10 | F to VW |
| 4.06 to 4.10 | 1-5 | N to W |
| 2.80 to 2.85 | 5-20 | VW |
| 2.73 | 15-35 | N |
| 2.60 | 5-10 | W |
| 2.43 | 35-40 | VW |
| 2.29 | 30-40 | N |
| 1.99 | 60-95 | N |
| 1.95 | 25-50 | FtoN |
| 1.79 | 1-10 | N to VW |
| 1.53 | 5-10 | N to W |
| 1.51 | 5-10 | W to VW |
| 1.41 | 40-60 | N to W |
| 1.39 | 100 | N |
| 1.23 to 1.26 | 1-5 | VW |
| 1.14 | 5-10 | N to W |
| 1.11 | 1-5 | W |
| 1.04 | 1-5 | VW |
| 1.00 | 5-10 | vw |
| 0.97 | 1-5 | W to VW |

4. A catalyst according to claim 2, in which the aluminium oxide support has, in the calcined state, a diffractogram comprising only the peaks which correspond to the following interplanar spacings, relative intensities and peak widths:
| Interplanar spacings d (10⁻¹⁰m) | Relative intensities I/I₀ (%) | Peak width |
|---|---|---|
| 5.41 to 5.47 | 0-5 | N |
| 5.03 to 5.22 | 1-5 | N to VW |
| 4.56 to 4.60 | 1-10 | F to VW |
| 4.06 to 4.10 | 1-5 | N to W |
| 2.86 to 2.88 | 5-20 | F to N |
| 2.80 to 2.85 | 5-20 | VW |
| 2.73 | 15-35 | N |
| 2.60 | 5-10 | w |
| 2.43 | 35-40 | VW |
| 2.29 | 30-40 | N |
| 1.99 | 60-95 | N |
| 1.95 | 25-50 | FtoN |
| 1.92 | 0-20 | N to VW |
| 1.79 | 1-10 | N to W |
| 1.53 | 5-10 | N to W |
| 1.51 | 5-10 | W to VW |
| 1.45 | 0-10 | w |
| 1.43 | 0-10 | N |
| 1.41 | 40-60 | N to W |
| 1.39 | 100 | N |
| 1.23 to 1.26 | 1-5 | VW |
| 1.14 | 5-10 | N to W |
| 1.11 | 1-5 | W |
| 1.04 | 1-5 | vw |
| 1.00 | 5-10 | VW |
| 0.97 | 1-5 | W to VW |

5. A catalyst according to one of claims 1 to 4, in which the quantity of nickel in the catalyst is in the range 1 % to 50% by weight and the specific surface area of the support is in the range 30 to 130 m²/g.

6. A catalyst according to one of claims 1 to 5 in which, in addition to the characteristic peaks of the support, the diffractogram for the catalyst in the oxide form comprises the characteristic peaks of nickel in the oxide form at the following interplanar spacings d (expressed in 10⁻¹⁰ m): 2.41, 2.09, 1.48, 1.25, 1.21, 1.04, 0.96, 0.93, 0.85, 0.80.

7. A catalyst according to one of claims 1 to 5 in which, in addition to the characteristic peaks of the support, the diffractogram for the catalyst in the reduced form passivated in air comprises the characteristic peaks of nickel in the reduced form, at the following interplanar spacings d (in 10⁻¹⁰ m): 2.03, 1.76, 1.25, 1.06, 1.02, 0.88, 0.81, 0.79.

8. A catalyst according to one of claims 1 to 7, in which the ratio of the relative intensities at respective interplanar spacings of 1.99 x 10⁻¹⁰ m and 1.95 x 10⁻¹⁰ m is such that (I/I₀)_{1.99}/(I/I₀)_{1.95} is in the range 1.2 to 3.8.

9. A process for preparing a catalyst support according to one of claims 1 to 8, in which the support is an agglomerate of alumina in the form of beads, said process comprising the following steps:
s1) dehydrogenation by flash calcining an aluminium hydroxide or oxyhydroxide, to obtain an active alumina powder; said flash calcining being heating using a stream of hot gas at a temperature in the range 400°C to 1200°C, for a period in the range 0.1 second to 5 seconds;
s2) forming said active alumina powder to obtain beads with a green packing density in the range 500 to 1100 kg/m³, and with a diameter primarily in the range 0.8 to 10 mm;
s3) heat treatment of said beads, at a temperature in the range 200°C to 1200°C, to provide them with a specific surface area in the range 50 to 420 m²/g;
s4) hydrothermal treatment of said beads by impregnation with water or an aqueous solution, then placing them in an autoclave at a temperature in the range 100°C to 300°C for a period of more than 45 minutes;
s5) calcining the agglomerates obtained at a temperature in the range 850°C to 1100°C.

10. A process for preparing a support according to claim 9, in which the active alumina powder obtained after dehydration of the aluminium hydroxide or oxyhydroxide is ground.

11. A process for preparing a support according to claim 9 or claim 10, in which the active alumina powder obtained after dehydration of the aluminium hydroxide or oxyhydroxide is washed with water or an aqueous acidic solution.

12. A process for preparing a catalyst support according to claims 1 to 8, in which the support is an agglomerate of alumina in the form of extruded materials, said process comprising the following steps:
s1) mixing and extruding an alumina-based material in order to form it;
s2) heat treatment of the extruded materials obtained, at a temperature in the range 200°C to 1200°C, to provide them with a specific surface area in the range 50 to 420 m²/g;
s3) hydrothermal treatment of said extruded materials by impregnation with water or an aqueous solution, then placing them in an autoclave at a temperature in the range 100°C to 300°C for a period of more than 45 minutes;
s4) calcining the agglomerates obtained at a temperature in the range 850°C to 1100°C.

13. A process for preparing a support according to claim 12, in which said alumina-based material is dehydrated hydrargillite.

14. A process for preparing a support according to claim 12, in which said alumina-based material is derived from the precipitation of boehmite, pseudo-boehmite or bayerite or a mixture of said materials.

15. A process for preparing a support according to one of claims 9 to 14, in which during forming of said alumina powder or said alumina-based material, one or more porogenic materials is added thereto.

16. A process for preparing a support according to claim 15, in which said porogenic materials are selected from the group constituted by wood flour, wood charcoal, sulphur, tars, plastic materials, emulsions of plastic materials, polyvinyl alcohols and naphthalene.

17. A process for preparing a support according to one of claims 9 to 16, in which the hydrothermal treatment is carried out using an aqueous acidic solution comprising one or more mineral and/or organic acids.

18. A process for preparing a support according to claim 17, in which the hydrothermal treatment is carried out using an aqueous acidic solution comprising at least one acid selected from the group constituted by nitric acid, hydrochloric acid, perchloric acid, sulphuric acid, acetic acid and formic acid.

19. A selective hydrogenation process, in which the catalyst of one of claims 1 to 9 is brought into contact with a feed selected from the group constituted by C3 steam cracking cuts, C4 steam cracking cuts, C5 steam cracking cuts and steam cracked gasolines.

## Patentansprüche

1. Katalysator, der Nickel auf einem Aluminiumoxidträger umfasst, wobei ein Diffraktogramm des Aluminiumoxidträgers im kalzinierten Zustand, welches mittels Röntgenbeugung erhalten wurde, Signale umfasst, die den folgenden Netzebenenabständen d und relativen Intensitäten I/Io entsprechen:
| Netzebenen -abstände d (10⁻¹⁰ m) | Relative Intensitäten I/Io (in %) |
|---|---|
| 5,03 bis 5,22 | 1 - 5 |
| 4,56 bis 4,60 | 1 - 10 |
| 4,06 bis 4,10 | 1 - 5 |
| 2,80 bis 2,85 | 5 - 20 |
| 2,73 | 15 - 35 |
| 2,60 | 5 - 10 |
| 2,43 | 35 - 40 |
| 2,29 | 30 - 40 |
| 1, 99 | 60 - 95 |
| 1,95 | 25 - 50 |
| 1,79 | 1 - 10 |
| 1,53 | 5 - 10 |
| 1,51 | 5 - 10 |
| 1,41 | 40 - 50 |
| 1,39 | 100 |
| 1,23 bis 1,26 | 1 - 5 |
| 1,14 | 5 - 10 |
| 1,11 | 1 - 5 |
| 1,04 | 1 - 5 |
| 1,00 | 5 - 10 |
| 0, 97 | 1 - 5 |

2. Katalysator nach Anspruch 1, wobei der Aluminiumoxidträger im kalzinierten Zustand ein Diffraktogramm aufweist, das ausschließlich Signale umfasst, welche den folgenden Netzebenenabstände und relativen Intensitäten entsprechen:
| Netzebenen -abstände d (10⁻¹⁰ m) | Relative Intensität I/Io (in %) |
|---|---|
| 5,41 bis 5,47 | 0 - 5 |
| 5,03 bis 5,22 | 1 - 5 |
| 4,56 bis 4,60 | 1 - 10 |
| 4,06 bis 4,10 | 1 - 5 |
| 2,86 bis 2,88 | 5 - 20 |
| 2,80 bis 2,85 | 5 - 20 |
| 2,73 | 15 - 35 |
| 2,6 | 5 - 10 |
| 2,43 | 35 - 40 |
| 2,29 | 30 - 40 |
| 1,99 | 60 - 95 |
| 1,95 | 25 - 50 |
| 1,92 | 0 - 20 |
| 1,79 | 1 - 10 |
| 1,53 | 5 - 10 |
| 1,51 | 5 - 10 |
| 1,45 | 0 - 10 |
| 1,43 | 0 - 10 |
| 1,41 | 40 - 60 |
| 1,39 | 100 |
| 1,23 bis 1,26 | 1 - 5 |
| 1, 14 | 5 - 10 |
| 1,11 | 1 - 5 |
| 1, 04 | 1 - 5 |
| 1,00 | 5 - 10 |
| 0, 97 | 1 - 5 |

3. Katalysator nach Anspruch 1, wobei der Aluminiumoxidträger im kalzinierten Zustand ein Diffraktogramm aufweist, das Signale umfasst, welche den folgenden Netzebenenabstände, relativen Intensitäten und Signalbreiten entsprechen:
| Netzebenen -abstände d (10⁻¹⁰ m) | Relative Intensitäten I/Io (in %) | Signalbreite |
|---|---|---|
| 5,03 bis 5,22 | 1 - 5 | N bis SB |
| 4,56 bis 4,60 | 1 - 10 | S bis SB |
| 4,06 bis 4,10 | 1 - 5 | N bis B |
| 2,80 bis 2,85 | 5 - 20 | SB |
| 2,73 | 15 - 35 | N |
| 2,60 | 5 - 10 | B |
| 2,43 | 35 - 40 | SB |
| 2,29 | 30 - 40 | N |
| 1,99 | 60 - 95 | N |
| 1,95 | 25 - 50 | S bis N |
| 1,79 | 1 - 10 | N bis SB |
| 1,53 | 5 - 10 | N bis B |
| 1,51 | 5 - 10 | B bis SB |
| 1,41 | 40 - 60 | N bis B |
| 1,39 | 100 | N |
| 1,23 bis 1,26 | 1 - 5 | SB |
| 1,14 | 5 - 10 | N bis B |
| 1,11 | 1 - 5 | B |
| 1,04 | 1 - 5 | SB |
| 1,00 | 5 - 10 | SB |
| 0,97 | 1 - 5 | B bis SB |

4. Katalysator nach Anspruch 2, wobei der Aluminiumoxidträgers im kalzinierten Zustand ein Diffraktogramm aufweist, das ausschließlich Signale umfasst, welche den folgenden Netzebenenabstände, relativen Intensitäten und Signalbreiten entsprechen:
| Netzebenen-abstände d (10⁻¹⁰ m) | Relative Intensität I/Io (in %) | Signalbreite |
|---|---|---|
| 5,41 bis 5,47 | 0 - 5 | N |
| 5,03 bis 5,22 | 1 - 5 | N bis SB |
| 4,56 bis 4,60 | 1 - 10 | S bis SB |
| 4,06 bis 4,10 | 1 - 5 | N bis B |
| 2,86 bis 2,88 | 5 - 20 | S bis N |
| 2,80 bis 2,85 | 5 - 20 | SB |
| 2,73 | 15 - 35 | N |
| 2, 60 | 5 - 10 | B |
| 2,43 | 35 - 40 | SB |
| 2,29 | 30 - 40 | N |
| 1,99 | 60 - 95 | N |
| 1,95 | 25 - 50 | S bis N |
| 1, 92 | 0 - 20 | N bis SB |
| 1,79 | 1 - 10 | N bis B |
| 1,53 | 5 - 10 | N bis B |
| 1,51 | 5 - 10 | B bis SB |
| 1,45 | 0 - 10 | B |
| 1,43 | 0 - 10 | N |
| 1,41 | 40 - 60 | N bis B |
| 1,39 | 100 | N |
| 1,23 bis 1,26 | 1 - 5 | SB |
| 1,14 | 5 - 10 | N bis B |
| 1,11 | 1 - 5 | B |
| 1,04 | 1 - 5 | SB |
| 1,00 | 5 - 10 | SB |
| 0,97 | 1 - 5 | B bis SB |

5. Katalysator nach einem der Ansprüche 1 bis 4, wobei der Nickelgehalt im Katalysator im Bereich von 1 bis 50 Gewichts% liegt und die spezifische Oberfläche des Trägers im Bereich von 30 bis 130 m²/g liegt.

6. Katalysator nach einem der Ansprüche 1 bis 5, wobei das Diffraktogramm des Katalysators in Oxidform, zusätzlich zu den charakteristischen Signalen des Trägers, bei den folgenden Netzebenenabständen (ausgedrückt in 10⁻¹⁰ m) die charakteristischen Signale des Nickels in Oxidform umfasst: 2,41, 2,09, 1,48, 1,25, 1,21, 1,04, 0,96, 0,93, 0,85, 0,80.

7. Katalysator nach einem der Ansprüche 1 bis 5, wobei das Diffraktogramm des Katalysators in reduzierter und an der Luft passivierter Form, zusätzlich zu den charakteristischen Signalen des Trägers, bei den folgenden Netzebenenabständen (in 10⁻¹⁰ m) die charakteristischen Signale des Nickels in reduzierter Form umfasst: 2,03, 1,76, 1,25, 1,06, 1,02, 0,88, 0,81, 0,79.

8. Katalysator nach einem der Ansprüche 1 bis 7, wobei das Verhältnis der relativen Intensitäten bei den Netzebenenabständen 1,99.10⁻¹⁰ m beziehunsgweise 1,95.10⁻¹⁰ m derart ist, dass (I/I₀)_{1,99} / (I/I₀)_{1,95} im Bereich von 1,2 bis 3,8 liegt.

9. Herstellungsverfahren für den Träger des Katalysators nach einem der Ansprüche 1 bis 8, wobei es sich bei dem Träger um ein Agglomerat aus Aluminiumoxid handelt, das in Form von Kügelchen vorliegt, wobei das Verfahren die folgenden Schritte umfasst:
s1) Dehydratisieren eines Aluminiumhydroxids oder - oxyhydroxids durch Flashkalzinierung, um ein aktives Aluminiumoxidpulver zu erhalten, wobei der Flashkalzinierung erfolgt, indem während einer Zeitdauer im Bereich von 0,1 Sekunden bis 5 Sekunden mit Hilfe eines heißen Gasstroms erhitzt wird, dessen Temperatur im Bereich von 400 bis 1200 °C liegt,
s2) Formgebung des aktiven Aluminiumoxidpulvers, sodass Kügelchen erhalten werden, deren Roh-Schüttdichte im Bereich von 500 bis 1100 kg/m³ liegt und deren Durchmesser überwiegend im Bereich von 0,8 bis 10 mm liegt,
s3) Wärmebehandlung der Kügelchen bei einer Temperatur im Bereich von 200 bis 1200 °C, um diesen eine spezifische Oberfläche im Bereich von 50 bis 420 m²/g zu verleihen,
s4) hydrothermale Behandlung der Kügelchen, indem diese mit Wasser oder einer wässrigen Lösung getränkt und dann für eine Dauer von mehr als 45 Minuten in einen Autoklaven mit einer Temperatur im Bereich von 100 bis 300 °C gegeben werden,
s5) Brand des Agglomerats, das auf diese Weise erhalten wurde, bei einer Temperatur im Bereich von 850 bis 1100 °C.

10. Herstellungsverfahren für den Träger nach Anspruch 9, wobei das aktive Aluminiumoxidpulver, das nach dem Dehydratisieren des Aluminiumhydroxyds oder - oxyhydroxids erhalten wird, zerkleinert wird.

11. Herstellungsverfahren für den Träger nach einem der Ansprüche 9 oder 10, wobei das aktive Aluminiumoxidpulver, das nach dem Dehydratisieren des Aluminiumhydroxyds oder -oxyhydroxids erhalten wird, mit Wasser oder einer sauren wässrigen Lösung gewaschen wird.

12. Herstellungsverfahren für den Träger des Katalysators nach einem der Ansprüche 1 bis 8, wobei es sich bei dem Träger um ein Agglomerat aus Aluminiumoxid handelt, das in Form extrudierter Materialien vorliegt, wobei das Verfahren die folgenden Schritte umfasst:
s1) Durchmischen und Extrudieren eines Materials auf Grundlage von Aluminiumoxid, zur Formgebung desselben;
s2) Wärmebehandlung der extrudierten Materialien, die auf diese Weise erhalten wurden, bei einer Temperatur im Bereich von 200 bis 1200 C, um diesen eine spezifische Oberfläche im Bereich von 50 bis 420 m²/g zu verleihen;
s3) hydrothermale Behandlung der extrudierten Materialien, indem diese mit Wasser oder einer wässrigen Lösung getränkt und dann für eine Dauer von mehr als 45 Minuten in einen Autoklaven mit einer Temperatur im Bereich von 100 bis 300 °C gegeben werden,
s4) Brand des Agglomerats, das auf diese Weise erhalten wurde, bei einer Temperatur im Bereich von 850 bis 1100 °C.

13. Herstellungsverfahren für den Träger nach Anspruch 12, wobei es sich bei dem Material auf Grundlage von Aluminiumoxid um dehydratisierten Hydrargillit handelt.

14. Herstellungsverfahren für den Träger nach Anspruch 12, wobei das Material auf Grundlage von Aluminiumoxid durch Fällung von Böhmit, Pseudo-Böhmit oder von Bayerit, oder einer Mischung aus derartigen Materialien, gewonnen wird.

15. Herstellungsverfahren für den Träger nach einem der Ansprüche 9 bis 14, wobei ein oder mehrere porenbildende Materialien dem Aluminiumoxidpulver oder dem Material auf Grundlage von Aluminiumoxid zugesetzt werden, wenn diese die Formgebung erfahren.

16. Herstellungsverfahren für den Träger nach einem der Ansprüche 15, wobei die porenbildenden Materialien aus der Gruppe ausgewählt sind, die aus Holzmehl, Holzkohle, Schwefel, Teerstoffen, Kunststoffen, Kunststoffemulsionen, Polyvinylalkoholen und Naphthalin besteht.

17. Herstellungsverfahren für den Träger einer der Ansprüche 9 bis 16, wobei die hydrothermale Behandlung mit Hilfe einer sauren wässrigen Lösung durchgeführt wird, die eine oder mehrere Mineralsäuren und/oder organische Säuren umfasst.

18. Herstellungsverfahren für den Träger nach Anspruch 17, wobei die hydrothermale Behandlung mit Hilfe einer sauren wässrigen Lösung durchgeführt wird, die mindestens eine Säure umfasst, welche aus der Gruppe ausgewählt ist, die aus Salpetersäure, Salzsäure, Perchlorsäure, Schwefelsäure, Essigsäure und Ameisensäure besteht.

19. Selektives Hydrierverfahren, wobei der Katalysator nach einem der Ansprüche 1 bis 9 mit einer Charge in Kontakt gebracht wird, die aus der Gruppe ausgewählt ist, welche aus den C3-Dampfcrackfraktionen, den C4-Dampfcrackfraktionen, den C5-Dampfcrackfraktionen und den Dampfcrackbenzinen besteht.
